# EUROPEAN PATENT APPLICATION

(11) **EP 4 841 578 A1**
(43) Date of publication of application: **18.11.2026**
(21) Application number: 25177140.8
(22) Date of filing: 16.05.2025
(51) Int. Cl.: G06V 10/62, G06V 10/764, G06V 10/82

(54) **A METHOD FOR TRAINING A MACHINE LEARNING MODEL TO TRACK A PLURALITY OF ENTITIES, A TRACKING METHOD, AND ASSOCIATED ELECTRONIC DEVICE**

(71) Applicant: TOYOTA JIDOSHA KABUSHIKI KAISHA, Toyota-shi, Aichi-ken 471-8571 (JP); ETH Zurich, 8092 Zürich (CH)
(72) Inventor: ABBELOOS, Wim, 1140 BRUSSELS (BE); LI, Siyuan, 8092 ZURICH (CH); SAKARIDIS, Christos, 8092 ZURICH (CH); YE, Mingqiao, 8092 ZURICH (CH); PICCINELLI, Luigi, 8092 ZURICH (CH); SEGU, Mattia, 8092 ZURICH (CH); YANG, Yung-Hsu, 8092 ZURICH (CH); VAN GOOL, Luc, 8092 ZURICH (CH)
(74) Representative: Cabinet Beau de Loménie

(57) **Abstract**

The invention concerns a method for training a machine learning model (100) to track a plurality of entities, the method comprising: inputting a sequence of frames *(1.. t)* into the machine learning model (100), the sequence of frames including entities to track among the frames of the sequence; and, training the machine learning model (100) to maximize a distance between embeddings of different entities within a same frame of the sequence, while minimizing the distance between embeddings of a same entity across two consecutive frames of the sequence, the training being performed over N>2 frames of the sequence of frames.

## Description

### BACKGROUND OF THE INVENTION

### 1. Field of the invention

The present invention relates to entity tracking, and more specifically to a computer-implemented method for training a machine learning model to track a plurality of entities. The invention also concerns a computer-implemented method for tracking a plurality of entities, and an electronic device implementing such training and/or tracking method.

### 2. Description of Related Art

Tracking is a critical concept in the fields of computer vision and machine learning. It refers to a process of continuously detecting, identifying, and following entities (e.g., real-world objects or individuals) over time and space. More precisely, the goal of tracking is to maintain a persistent identification of the same entity across different frames, despite changes in appearance, position, and/or orientation.

Tracking is essential in a wide range of domains where continuous monitoring or surveillance is required, such as in security systems (e.g., to identify suspicious behavior of individuals); in autonomous vehicles (e.g., to anticipate trajectories to avoid collisions); or in sports (e.g., for real-time player and ball tracking for performance analysis). In fact, in these domains, it is necessary to maintain a consistent identity for entities moving across different frames of a video bitstream, despite possible variations in appearance due to occlusions, and/or to changes in lighting and pose.

Multiple Object Tracking, MOT, refers to the process of simultaneously tracking the movement and identity of multiple entities within a given environment. Unlike single object tracking, which focuses on a single entity (e.g., one vehicle or one individual), MOT involves maintaining consistent tracking and identities for all entities in the environment over time, as they move through different frames of a video bitstream.

Despite significant progress, current MOT approaches are predominantly trained on exhaustively annotated datasets of limited size and narrow domain coverage, severely limiting their ability to generalize to diverse real-world scenarios. In addition, recent attempts to improve generalization struggle to adequately model the challenging dynamics present in real-world videos, such as heavy occlusions, drastic appearance and viewpoint changes, and complex object deformations.

Finally, current contrastive learning approaches for MOT often struggle to scale efficiently over extended time sequences, or they introduce numerous irrelevant negative samples. This weakens the critical local discriminative cues required for robust frame-to-frame association, resulting in degraded tracking performance.

There is thus a need for methods solving problems of the prior art.

### SUMMARY

In this respect, the present disclosure relates to a computer-implemented method for training a machine learning model to track a plurality of entities, the method comprising:
- inputting a sequence of frames into the machine learning model, the sequence of frames including entities to track among the frames of the sequence; and,
- training the machine learning model to maximize a distance between embeddings of different entities within a same frame of the sequence, while minimizing the distance between embeddings of a same entity across two consecutive frames of the sequence, the training being performed over N>2 frames of the sequence of frames.

The present disclosure introduces a novel temporal contrastive framework designed to maintain local discriminative power while enforcing long-term invariance of appearance-based features.

Unlike global supervised contrastive methods that introduce numerous irrelevant negative samples, this approach restricts negatives locally in time, thereby ensuring discriminability among nearby instances. On the other hand, positive pairs are constructed in a chained manner across frames: each entity instance is treated as an anchor and encouraged to match its corresponding instance in the next frame, while being pushed apart from other instances within the same frame. By recursively chaining instances over time, this training method implicitly enforces "transitive consistency" of entity features. In addition to promoting long-range temporal coherence, this method also grants local discriminability to instances, as negative samples remain locally constrained.

In the present description, the term "entities" refers to any kind of physical entity, such as a person, an animal, a robot, a vehicle, or specific items, such as packages, bags, or equipment.

In a known manner, the term "embeddings" refers to the representation of entities in a continuous vector space where similar entities are represented by vectors that are close together in that space. The "distance" between embeddings refers to how far apart or close together two embeddings are in the vector space. This distance is used to quantify the similarity or dissimilarity between the entities represented by these embeddings. The smaller the distance, the more similar the entities are considered to be, and *vice versa.* Common distance measures used between embeddings include: the Euclidean distance, the Manhattan distance and the Minkowski distance.

In particular implementations, the training method may additionally comprise one or more of the following features, in isolation or in any technically possible combination.

In particular implementations, the training step is performed over the entire sequence of frames.

In particular implementations, consecutive frames of the sequence are organized into pairs, wherein the training step is performed by minimizing a chain contrastive loss function 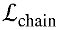 resulting from an aggregation of cross-entropy losses 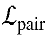 computed across all pairs of the sequence.

In particular implementations, the cross-entropy loss 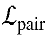 is a normalized temperature-scaled cross-entropy loss.

In particular implementations, the cross-entropy loss 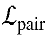 is a normalized temperature-scaled cross-entropy loss performed between embeddings of two entities corresponding to positive pairs within two consecutive frames, and the normalized temperature-scaled cross-entropy loss 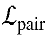 is a function of:
$- log \left(\frac{exp \left({f}_{t}^{i}{⋅}^{{f}_{t + 1}^{j}}/τ\right)}{{\sum }_{k \neq j} exp \left({f}_{t}^{i}{⋅}^{{f}_{t + 1}^{k}}/τ\right) + exp \left({f}_{t}^{i}{⋅}^{{f}_{t + 1}^{j}}/τ\right)}\right)$
with *τ* a temperature parameter, ${f}_{t}^{i}$ the embeddings of entity i in frame *t,* ${f}_{t + 1}^{j}$ the embeddings of entity *j* in frame *t +* 1, ${f}_{t + 1}^{k}$ the embeddings of entity *k* in frame *t*+1.

In particular implementations, the chain contrastive loss function 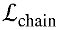 is a function of:
$\frac{1}{\left|M\right|} {\sum }_{\left(t,t+1\right) ∈ T} {\sum }_{\left(i, j\right) ∈ {M}_{t , t + 1}} {L}_{pair} \left({f}_{t}^{i}, {f}_{t + 1}^{j}\right)$
with 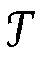 a set of consecutive frame pairs, | 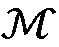 | a number of positive pairs sampled across the entire sequence of frames, *τ* a temperature parameter, ${f}_{t}^{i}$ the embeddings of entity *i* in frame *t,* ${f}_{t + 1}^{j}$ the embeddings of entity *j* in frame *t +* 1, ${f}_{t + 1}^{k}$ the embeddings of entity *k* in frame *t*+1.

In particular implementations, the machine learning model is a Transformer-based network, wherein at least some of the entities to track are labeled, wherein the training method further comprises:
- for at least a subset of frames of the sequence of frames, extracting portions of frames corresponding to pseudo-negative proposals ;
- considering the pseudo-negative proposals as hard negatives when computing the chain contrastive loss function.

Pseudo-negative proposals refer to entity pairs assumed to be negative, despite not being explicitly labeled as such.

More specifically, these characteristics offer the advantage of addressing the challenge posed by sparse spatial annotations by leveraging large-scale pseudo-labels generated, for example, from pretrained instance segmentation models such as the Segment Anything Model (SAM) or Detic (Detecting Twenty-thousand Classes using Image-level Supervision). These pseudo-labeled entities serve as additional negative examples, significantly expanding the pool of hard negatives available during training and thereby enhancing the discriminative power of the learned entity representations.

In particular implementations, considering the pseudo-negative proposals as hard negatives includes computing the contrastive loss function 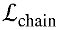 as a function of a negative loss 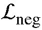 , said negative loss 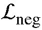 being a function of:
$- {\sum }_{t} {\sum }_{i} log \left(\frac{exp \left({f}_{t}^{i}{⋅}^{{f}_{t}^{i}}/τ\right)}{{\sum }_{k \neq j} exp \left({f}_{t}^{i}{⋅}^{{f}_{t}^{j}}/τ\right) + {\sum }_{m} exp \left({f}_{t}^{i}{⋅}^{{f}_{t}^{m}}/τ\right)}\right)$
with *m* the index of the pseudo-negative proposals, *τ* a temperature parameter, ${f}_{t}^{i}$ the embeddings of entity *i* in frame *t,* ${f}_{t}^{j}$ the embeddings of entity *j* in frame *t,* ${f}_{t}^{m}$ the embeddings of the pseudo-negative proposal *m* in frame *t.*

In particular implementations, the machine learning model includes a frozen visual backbone connected to a deformable transformer encoder, wherein the sequence of frames serves as input to the frozen visual backbone, and the method further comprises:
- generating, by the frozen visual backbone, multi-scale spatial features ${\left\{{F}_{l}\right\}}_{l = 1}^{L}$, with L a total number of feature levels of the frozen visual backbone;
- generating, by the deformable transformer encoder taking the multi-scale spatial features ${\left\{{F}_{l}\right\}}_{l = 1}^{L}$ as an input, a final encoded feature map **M** comprising *L* unified contextual representations.

In this particular implementation, the frozen visual backbone is pretrained on static images, and a deformable transformer encoder is used as a lightweight adapter to take advantage of that powerful frozen visual backbone pre-trained on static images.

In particular implementations, $∈ {ℝ}^{B \times S \times D}$, with *B* a batch size, *S* a total number of spatial locations across all feature levels, and *D* is a feature embedding dimension.

In particular implementations, the method further comprises refining the final encoded feature map **M** by integrating a spatial context.

This feature offers the advantage of refining entity embeddings by integrating rich spatial context, which is critical for accurate tracking in complex scenarios.

In particular implementations, integrating a spatial context comprises:
- generating, from the final encoded feature map **M** and from regions of interest corresponding to spatial locations of entities to track, a fixed-size feature map per region of interest; and,
- determining, for each fixed-size feature map, attention weights over spatial locations within each of the regions of interest.

In particular implementations, attention weights **f**ₐₜₜₙ are expressed as a function of:
${\sum }_{k , l} {f}_{k , l} ⋅ σ \left(MLP\left({f}_{k , l}\right)\right)$
with **f***_{x,y}* regions of interest features, σ a spatial softmax, and MLP a multi-layer perceptron function used to generate embeddings.

In particular implementations, integrating a spatial context further comprises:
- predicting learnable spatial offsets from the regions of interest, the offsets specifying additional sampling locations within each of the regions of interest;
- determining enriched spatial features by applying a differentiable bilinear sampling function on the predicted spatial offsets; and,
- concatenating and fusing the enriched spatial features to obtain spatially enhanced embeddings.

In particular implementations, the method further comprises refining the final encoded feature map **M** by integrating a temporal context.

This feature offers the advantage of refining entity embeddings by integrating rich temporal context, which is critical for accurate tracking in complex scenarios.

In particular implementations, integrating a temporal context further comprises:
- for each spatially enhanced embedding, predicting adaptive sampling offsets and corresponding attention weights;
- extracting features from neighboring spatial and temporal locations within a buffer of unified contextual representations constructed from the final encoded feature map **M;** and,
- aggregating the extracted features using the attention weights to produce spatially and temporally-enhanced embeddings.

The integration of a rich temporal context ensures robust and accurate association, even under complex occlusions and appearance variations, while maintaining real-time performance (e.g., 42 FPS on an NVIDIA RTX 4090 GPU).

The adaptive sampling strategy enables the machine learning model to selectively incorporate relevant historical context, effectively capturing both local spatial detail and long-range temporal coherence.

In particular implementations, the method further comprises modulating the spatially and temporally-enhanced embeddings.

This modulation step contributes to further strengthening the discriminative capacity of the model, and produces an output **f**_{modulated} .

In particular implementations, modulating the spatially and temporally-enhanced embeddings is expressed as a function of
$\frac{1}{{N}_{h}} {\sum }_{h = 1}^{{N}_{h}} σ \left({W}_{h}{f}_{fused}\right) ⋅ {f}_{fused}$
with *Nₕ* a number of attention heads, **W***ₕ* head-specific learnable linear transformations, *σ* a head-level softmax, and **f**_{fused} the spatially and temporally-enhanced embeddings.

In particular implementations, the method further comprises refining the modulated embeddings through a multiscale cross-attention mechanism.

Specifically, the spatially and temporally enhanced embeddings serve as queries to a multiscale cross-attention module that aggregates rich spatial context from encoder memory across multiple feature scales of the current frame: ${f}_{final} = CA \left({f}_{modulated}, M\right)$
where **M** contains multi-level spatial features.

This aggregation captures detailed spatial relationships within the current frame, producing robust, contextually enriched entity embeddings that are critical for accurate entity tracking.

According to a second aspect, the present invention concerns a computer-implemented method for tracking a plurality of entities comprising:
- inputting a sequence of frames into a machine learning model trained according to the training method mentioned above, the sequence of frames including entities to track among the images of the sequence;
- generating embeddings of a detected entity; and,
- associating said entity with an existing track by computing similarity scores between the generated embeddings and embeddings of entities currently tracked.

A further aspect of the invention concerns an electronic device configured to implement the training method according to the invention or a tracking method according to the invention.

Embodiments of the present invention also extend to programs which, when run on a computer or processor, cause the computer or processor to carry out the method described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 depicts, for illustrative purposes, an overview of the machine learning model to train, according to an example of implementation of the invention;
- FIG.2 illustrates on-board modules in a training device, according to an example of implementation of the invention;
- FIG. 3 illustrates an example of the hardware architecture of the training device of Figure 2;
- FIG. 4 is a flowchart of a training method executed by a training device, according to an example of implementation of the invention;
- FIG.5 illustrates on-board modules in a tracking device, according to an example of implementation of the invention;
- FIG. 6 illustrates an example of the hardware architecture of the tracking device of Figure 5;
- FIG. 7 is a flowchart of a tracking method executed by a tracking device, according to an example of implementation of the invention; and,
- FIG. 8 shows performance of the SupCon method, of the broken chain contrast, and of the unbroken chain contrast.

### DETAILED DESCRIPTION OF EMBODIMENTS

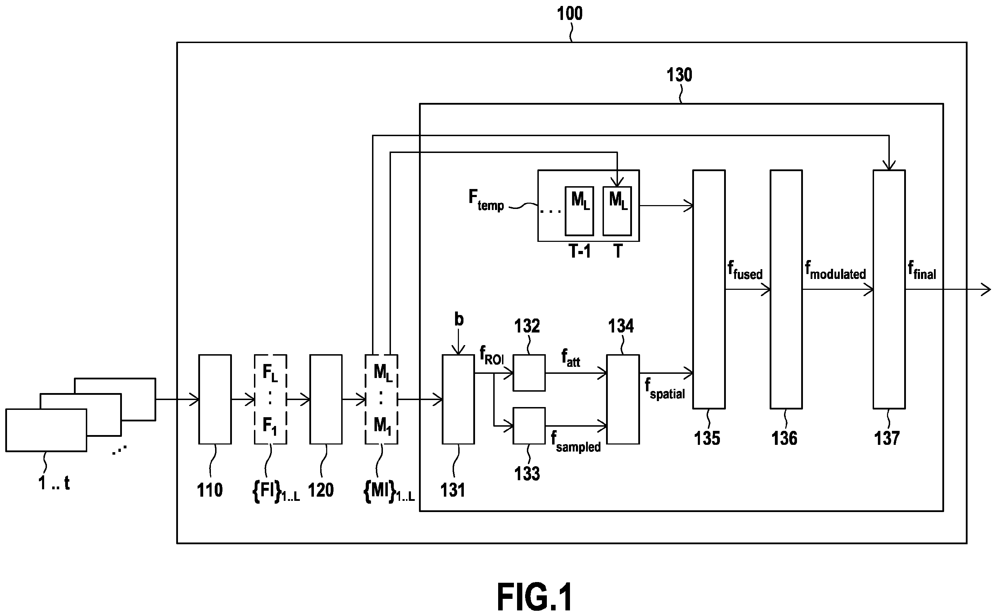

Figure 1 depicts, for illustrative purposes, an overview of the machine learning model, according to an example of implementation of the invention
As illustrated by Figure 1, the machine learning model 100 comprises a frozen visual backbone 110 taking a video sequence of frames 1, . . , *t* as an input. In a well-known way, a frozen visual backbone refers to a pre-trained neural network model that is used as a basic part of a larger system for processing visual data, such as images or videos. In this case, the parameters (i.e., weights) of its layers are fixed and are not updated during training of the machine learning model 100, and only the additional layers on top of the frozen visual backbone 110 are trained. The use of a frozen visual backbone 110 is advantageous as it reduces both time and computational resources, while still leveraging the power of a well-trained network. In a particular implementation, DINOv2 is used as a frozen visual backbone 110. DINOv2 is a Vision Transformer-based model trained using self-supervised learning techniques. Unlike traditional models that rely on labeled datasets, DINOv2 learns to understand images by predicting invariant features across different augmentations of the same image. This approach allows it to generalize across various computer vision tasks.

This frozen visual backbone 110 is configured to generate multi-scale spatial features ${\left\{{F}_{l}\right\}}_{l = 1}^{L}$, with *L* a total number of feature levels of the frozen visual backbone, supplied to the input of a deformable transformer encoder 120. Actually, the deformable transformer encoder 120 is used as a lightweight adapter to take advantage of the frozen visual backbone 110 pre-trained on static images. A deformable transformer encoder is a machine learning model based on the Transformer architecture, but designed to efficiently handle spatial data by allowing selective focus on important regions of an input sequence or image, while disregarding less relevant areas. A deformable transformer encoder is particularly useful in tasks like image processing and computer vision, where the input is spatially structured data.

The deformable transformer encoder 120 takes multi-scale spatial features ${\left\{{F}_{l}\right\}}_{l = 1}^{L}$ as an input, and generates a final encoded feature map $M = {\left\{{M}_{l}\right\}}_{l = 1}^{L}$ including *L* unified contextual representations **M***ₗ*, wherein $M ∈ {ℝ}^{B \times S \times D}$, with *B* a batch size, *S* a total number of spatial locations across all feature levels, and *D* is a feature embedding dimension.

This final encoded feature map **M** is fed into a spatio-temporal attention-based decoder 130. This spatio-temporal attention-based decoder 130 includes several components described above and referenced 131, 132, ..., 137. More specifically, the final encoded feature map **M** and regions of interest, RoI, corresponding to spatial locations of entities to track are fed into a "feature alignment unit" 131 configured to generate a fixed-size feature map per region of interest **f**_{RoI}. In a particular implementation, this feature alignment unit 131 performs a RoIAlign operation. In a well-known way, RoIAlign extracts fixed-size feature maps from each region of interest without quantizing the RoI boundaries or bins. To that end, RoIAlign uses bilinear interpolation to compute the exact values of the input features at different (e.g., four) regularly sampled locations in each RoI bin. This approach eliminates the harsh quantization that can misalign features, leading to more accurate spatial representations.

As illustrated by Figure 1, this feature alignment unit 131 is coupled to a learnable spatial attention pooling unit 132 that takes each fixed-size feature map per region of interest **f**_{RoI} as an input, and is configured to compute spatial attention weights **f**ₐₜₜₙ for each fixed-size feature map, wherein said attention weights **f**ₐₜₜₙ are determined over spatial locations within the corresponding region of interest.

The feature alignment unit 131 is also connected to an adaptive sampling unit 133 that also takes each of the fixed-size feature map per region of interest **f**_{RoI} as an input, and is configured to predict learnable spatial offsets from RoI features. These offsets specify additional sampling locations within each RoI, from which contextually rich features are sampled using a differentiable bilinear sampling operation, denoted as **f**_{sampled}.

The learnable spatial attention pooling unit 132 and the adaptive sampling unit 133 are both connected to a linear layer 134 configured to concatenate and fuse the spatial-attention-pooled features **f**ₐₜₜₙ and the adaptively sampled features **f**_{sampled}, thereby producing final spatially enhanced embeddings **f**ₛₚₐₜᵢₐₗ .

The spatio-temporal attention-based decoder 130 further comprises a buffer of historical feature maps extracted from the deformable transformer encoder 120, denoted as ${F}_{temp} ∈ {ℝ}^{B \times D \times T \times H \times W}$, where *T* is the temporal window size.

As illustrated in Figure 1, at each iteration, only the unified contextual representation **M***_{L}* from the last level *L* is stored in the buffer **F**ₜₑₘₚ. It should be noted, however, that this is only one implementation choice, and various alternative configurations may be employed.

The spatio-temporal attention-based decoder 130 also comprises a spatio-temporal fusion unit 135 that takes the final spatially enhanced embeddings **f**ₛₚₐₜᵢₐₗ and the historical feature maps stored within the buffer **F**ₜₑₘₚ as an input. It is configured to dynamically sample relevant spatiotemporal features from this buffer **F**ₜₑₘₚ. Specifically, for each entity proposal embedding ${f}_{spatial} ∈ {ℝ}^{B \times L \times D}$**,** adaptive sampling offsets Δ*t,* Δ*x,* Δ*y* and corresponding attention weights are predicted. These offsets guide a deformable sampling procedure, which extracts informative features from neighboring spatial and temporal locations within the buffer **F**ₜₑₘₚ. The spatio-temporal fusion unit 135 is also configured to generate spatially and temporally-enhanced embeddings **f**_{fused} by aggregating the extracted informative features using the attention weights.

The spatio-temporal attention-based decoder 130 further comprises a head-specific feature modulation unit 136 connected to the spatio-temporal fusion unit 135 and that takes the spatially and temporally-enhanced embeddings **f**_{fused} as an input. This head-specific feature modulation unit 136 is configured to modulate the embeddings **f**_{fused} through learned scaling factors, and to generate modulated embeddings **f**_{modulated}.

These modulated embeddings **f**_{modulated} are then fed into a multiscale cross-attention refinement unit 137. The spatially and temporally enhanced embeddings serve as queries for this multiscale cross-attention refinement unit 137, which is configured to aggregate rich spatial context from encoder memory across multiple feature scales of the current frame, thereby generating final embeddings **f**_{final}.

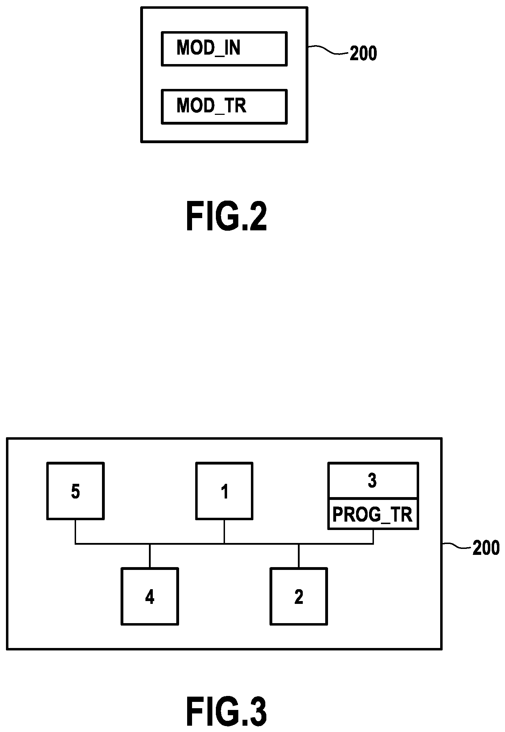

Figure 2 illustrates on-board modules in an electronic device (also referred to as the training device below) configured to implement the training method according to the invention, according to an example of implementation of the invention.

This training device is configured to train a machine learning model to track a plurality of entities across different frames. It includes, for this purpose, several functional modules:
- an input module MOD_IN for inputting a sequence of frames into the machine learning model, the sequence of frames including entities to track among the frames of the sequence;
- a training module MOD_TR for training the machine learning model to maximize a distance between embeddings of different entities within a same frame of the sequence, while minimizing the distance between embeddings of a same entity across two consecutive frames of the sequence, the training being performed over N>2 frames of the sequence of frames.

The machine learning model may be stored locally within the training device or, alternatively, may be accessed by this training device via communication means described below.

The functionalities attached to each of the modules are explained in detail later on when describing implementations of said training method.

Figure 3 illustrates an example of the hardware architecture of the training device of Figure 2.

To this end, the training device has the hardware architecture of a computer. As shown in Figure 3, the training device comprises a processor 1. Although illustrated as a single processor 1, two or more processors can be used according to particular needs, desires, or particular implementations of the training device. Generally, the processor 1 executes instructions and manipulates data to perform the operations of the training device and any algorithms, methods, functions, processes, flows, and procedures as described in the present disclosure.

The training device also comprises communication means 5. Although illustrated as a single communication means 5 in Figure 3, two or more communication means can be used according to particular needs, desires, or particular implementations of the training device. The communication means may be used by the training device for communicating with another electronic device (e.g., storing the machine learning model) that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside the illustrated training device.

The training device also comprises a random access memory 2, a read-only memory 3, and a non-volatile memory 4. The read-only memory 3 of the training device constitutes a recording medium conforming to the invention, which is readable by processor 1 and on which is recorded a computer program PROG_TR conforming to the invention, containing instructions for carrying out the steps of the training method according to the invention.

The program PROG_TR defines functional modules of the training device, which are based on or control the aforementioned elements 1 to 5 of the training device, and which comprise in particular the modules described with reference to Figure 2.

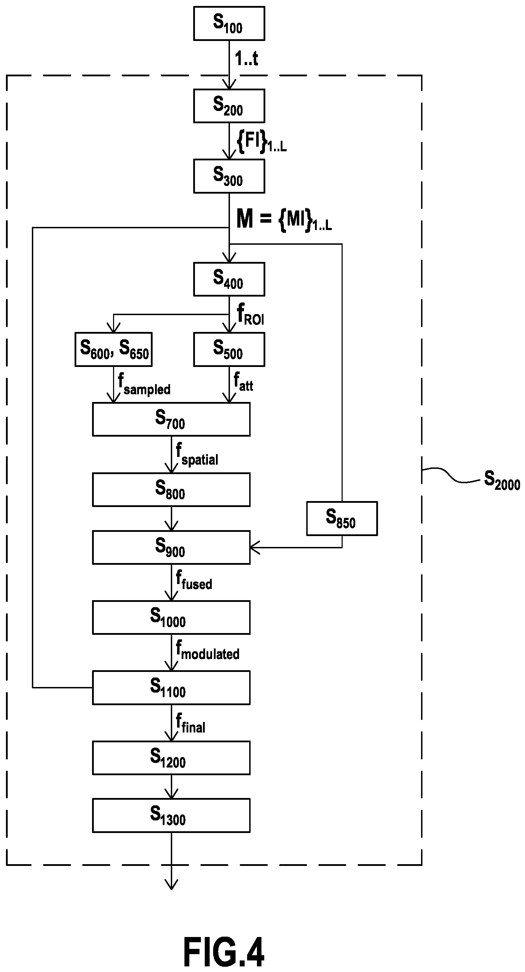

Figure 4 is a flowchart of a training method executed by a training device - such as that shown in Figures 2 and 3 - according to an example of implementation of the invention.

In a formal way, given a video sequence *V* = {1*, . . , t*} of frames 1, . . , *t*, the goal of the training method, further detailed below, is to assign a unique and consistent identity to each entity detected across frames. Let ${O}_{t} = \left\{{o}_{t}^{1},{o}_{t}^{2},…,{o}_{t}^{N}\right\}$ represent the set of entity instances detected at frame *t,* where each entity ${o}_{t}^{i}$ is associated with a feature embedding ${f}_{t}^{i} ∈ {ℝ}^{d}$ and a bounding box ${b}_{t}^{i} ∈ {ℝ}^{4}$ in frame *t*. The objective of the training method is to learn a function *f_{θ}* that extracts robust embeddings such that, for each entity instance, its respective embedding is invariant (or almost invariant) across frames as well as distinct from those of other entities.

As further described below, to enforce temporal consistency, positive pairs of embeddings are sampled across consecutive frames in a chained manner: each instance in frame *t* forms a positive pair with its counterpart in frame *t +* 1, resulting in chains of pairwise similarities through the entire sequence.

As shown in Figure 4, the training method comprises a first step of inputting a sequence of frames into a machine learning model. The sequence includes entities to be tracked across the frames. This step can be carried out, for example, by the input module MOD_IN of the training device 200.

The training method also comprises a step S2000 of training the machine learning model to maximize a distance between embeddings of different entities within a same frame of the sequence, while minimizing the distance between embeddings of a same entity across two consecutive frames of the sequence. The training is performed over N>2 frames of the sequence of frames, and for instance over the entire sequence of frames. This step can be carried out, for example, by the training module MOD_TR of the training device 200, and comprises steps S200, S300, ..., S1300, which are described in detail below.

At step S200, multi-scale spatial features ${\left\{{F}_{l}\right\}}_{l = 1}^{L}$ are generated by the frozen visual backbone 110, with L a total number of feature levels of the frozen visual backbone, and supplied to the input of a deformable transformer encoder 120.

The training method also comprises a step S300 in which the multi-scale spatial features ${\left\{{F}_{l}\right\}}_{l = 1}^{L}$ are aggregated and a final encoded feature map $M = {\left\{{M}_{l}\right\}}_{l = 1}^{L}$ including *L* unified contextual representations **M***ₗ* is generated, wherein $∈ {ℝ}^{B \times S \times D}$, with *B* a batch size, *S* a total number of spatial locations across all feature levels, and *D* is a feature embedding dimension. This step can be carried out, for example, by the deformable transformer encoder 120.

The decoder 130 subsequently refines the entity embeddings by incorporating enriched spatial and temporal context, which is essential for achieving accurate tracking in complex or dynamic scenarios.

At step S400, a fixed-size feature map is generated per region of interest **f**_{RoI}, as a function of the final encoded feature map **M** and as a function of regions of interest ***b*** corresponding to spatial locations of entities to track. This step can be carried out, for example, by the feature alignment unit 131. In a particular implementation, this step S400 corresponds to a RoIAlign operation. As mentioned above, in a well-known way, RoIAlign extracts fixed-size feature maps from each region of interest without quantizing the RoI boundaries or bins. To that end, RoIAlign uses bilinear interpolation to compute the exact values of the input features at different (e.g., four) regularly sampled locations in each RoI bin. This approach eliminates the harsh quantization that can misalign features, leading to more accurate spatial representations.

More formally, this step S400 can be expressed as follows: ${f}_{RoI} = RoIAlign \left({M}_{L}, b\right)$ (1)
with **M***_{L}* the final (L-th) unified contextual representation, and **b** the bounding box coordinates.

At step S500, spatial attention weights **f**ₐₜₜₙ are computed for each fixed-size feature map, over spatial locations within the corresponding region of interest. This step can be carried out, for example, by the learnable spatial attention pooling unit 132. More formally, this step S500 can be expressed as follows: ${f}_{att} = {\sum }_{k , l} {f}_{k , l} ⋅ σ \left(MLP\left({f}_{k , l}\right)\right)$ (2)
with **f***_{x,y}* the RoI features, and *σ* a spatial softmax.

The training method also comprises a step S600 of predicting learnable spatial offsets from the regions of interest. These offsets specify additional sampling locations within each of the regions of interest. Then, at step S650, enriched spatial features, denoted as **f**_{sampled}, are determined by applying a differentiable bilinear sampling function on the predicted spatial offsets. These steps S600 and S650 can be carried out, for example, by the adaptive sampling unit 133.

The training method also comprises a step S700 during which the spatial-attention-pooled features **f**ₐₜₜ and the adaptively sampled features **f**_{sampled} are then concatenated and fused via a linear layer 134, producing the final spatially enhanced embeddings **f**ₛₚₐₜᵢₐₗ . More formally, this step S700 can be expressed as follows: ${f}_{spatial} = Linear \left(\left[{f}_{attn}, {f}_{sampled}\right]\right)$ (3)

The training method further comprises a refinement of the final encoded feature map **M** by integrating a spatial context. To that end, the training method comprises a step S800 of predicting, for each spatially enhanced embedding ${f}_{spatial} ∈ {ℝ}^{B \times L \times D}$**,** adaptive sampling offsets Δ*t,* Δ*x,* Δ*y* and corresponding attention weights. At step S850, features are extracted from neighboring spatial and temporal locations within a buffer of unified contextual representations constructed from the final encoded feature map **M.** This buffer may correspond to the buffer **F**ₜₑₘₚ referred to in Figure 1. For the record, in particular implementations, ${F}_{temp} ∈ {ℝ}^{B \times D \times T \times H \times W}$**,** where *T* corresponds to the temporal window size. During that step S850, a deformable sampling procedure is applied which extracts informative features from neighboring spatial and temporal locations within **F**ₜₑₘₚ, as a function of the predicted offsets.

A step S900 is then carried out during which the extracted informative features are aggregated using the attention weights to produce spatially and temporally-enhanced embeddings **f**_{fused} . This step S900 can be carried out, for example, by the spatio-temporal fusion unit 135.

More formally, this step S700 can be expressed as follows: ${f}_{fused} = SpatiotemporalFusion \left({f}_{spatial}, {F}_{temp}\right)$ (4)

This adaptive sampling strategy enables the machine learning model to selectively incorporate relevant historical context, effectively capturing both local spatial detail and long-range temporal coherence. Moreover, due to its sparse sampling nature, this approach remains computationally efficient.

At step S1000, the spatially and temporally-enhanced embeddings **f**_{fused} are subject to head-specific feature modulation using learned scaling factors. This step S1000 offers the advantage of improving discriminability of entities. More formally, this step S1000 can be expressed as follows: ${f}_{modulated} = \frac{1}{{N}_{h}} {\sum }_{h = 1}^{{N}_{h}} σ \left({W}_{h}{f}_{fused}\right) ⋅ {f}_{fused}$ (5)
with *Nₕ* the number of attention heads, **W***ₕ* head-specific learnable linear transformations, and *σ* a head-level softmax. This step S1000 can be carried out, for example, by the head-specific feature modulation unit 136.

The training method further comprises a step S1100, in which final embeddings **f**_{final} are generated. More precisely, the modulated version of the spatially and temporally enhanced embeddings are used as queries within a multiscale cross-attention unit, such as the multiscale cross-attention refinement unit 137. This unit aggregates rich spatial context from the encoder memory across multiple feature scales of the current frame. More formally, this step S1100 can be expressed as follows: ${f}_{final} = CA \left({f}_{modulated}, M\right)$ (6)
with **M** the final encoded feature map including *L* unified contextual representations **M***ₗ*. This aggregation step captures detailed spatial relationships within the current frame, producing robust, contextually enriched entity embeddings crucial for accurate entity tracking.

The method then comprises a step S1200 of calculating a loss 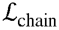 . In a known manner, the loss quantifies the deviation of the output of the model from the desired output. Subsequently, in step S1300, the loss value calculated in step S1200 is propagated backwards through the model. An optimization algorithm is applied that uses the gradients calculated in step 1300 to update the weights in a direction that minimizes the loss function.

For the record, to enforce temporal consistency, positive pairs of embeddings are sampled across consecutive frames in a chained manner: each instance in frame *t* forms a positive pair with its counterpart in frame *t +* 1, resulting in chains of pairwise similarities through the entire clip. More formally, given a pair of consecutive frames (*t, t +* 1), let ${F}_{t} = \left\{{f}_{t}^{1},{f}_{t}^{2},…,{f}_{t}^{{N}_{t}}\right\}$ and ${F}_{t + 1} = \left\{{f}_{t + 1}^{1},{f}_{t + 1}^{2},…,{f}_{t + 1}^{{N}_{t + 1}}\right\}$ denote the sets of embeddings of entity instances in the two frames. Let 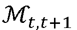 denote the set of matched, i.e. positive, instance pairs between these frames based on ground-truth identities. In a particular implementation, the pairwise contrastive loss between two matched embeddings ( ${f}_{t}^{i} , {f}_{t + 1}^{j}$) is computed as the normalized temperature-scaled cross-entropy loss: ${L}_{pair} \left({f}_{t}^{i}, {f}_{t + 1}^{j}\right) = - log \left(\frac{exp \left({f}_{t}^{i}⋅\frac{{f}_{t + 1}^{j}}{τ}\right)}{{\sum }_{k \neq j} exp \left({f}_{t}^{i}⋅\frac{{f}_{t + 1}^{k}}{τ}\right) + exp \left({f}_{t}^{i}⋅\frac{{f}_{t + 1}^{j}}{τ}\right)}\right)$ (7)
with *τ* a temperature parameter, ${f}_{t}^{i}$ the embeddings of entity *i* in frame *t,* ${f}_{t + 1}^{j}$ the embeddings of entity *j* in frame *t +* 1, ${f}_{t + 1}^{k}$ the embeddings of entity *k* in frame *t*+1. This temperature parameter *τ* is, by way of example, set at 0.1. Negative pairs are constructed locally from other entities in the neighboring frame, thus preserving strong discriminative signals at short temporal distances.

At this stage, it is important to note that other loss functions could be considered, such as the lifted structured loss described in the article "Deep Metric Learning via Lifted Structured Feature Embedding," H. O. Song & Al., 2016 IEEE Conference on Computer Vision and Pattern Recognition (CVPR), Las Vegas, NV, USA, 2016, pp. 4004-4012.

The final Chain Contrastive Loss for an entire sequence of frames is computed by aggregating the pairwise losses across the sampled frame pairs: ${L}_{chain} = \frac{1}{\left|M\right|} {\sum }_{\left(t,t+1\right) ∈ T} {\sum }_{\left(i, j\right) ∈ {M}_{t , t + 1}} {L}_{pair} \left({f}_{t}^{i}, {f}_{t + 1}^{j}\right) ,$ (8)
where 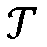 denotes the set of consecutive frame pairs, and | 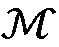 | is the total number of positive pairs sampled across the entire sequence of frames. This ensures that gradients propagate effectively through chained instances, implicitly enforcing long-range transitive consistency: if entity *A* at time *t* matches entity *A'* at *t +* 1, and *A'* matches *A"* at *t* + 2, then our approach transitively encourages similarity between *A* and *A".*

Thus, embeddings are learned by minimizing the chain contrastive loss 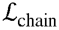 through standard backpropagation, thereby enabling robust representation learning from sparsely annotated video data.

In particular implementation, pseudo-negative proposals generated by large-scale foundation models are integrated to augment the training data. More precisely, for each frame of the sequence of frames, portions of frames corresponding to pseudo-negative proposals are extracted. Then, the pseudo-negative proposals are considered as hard negatives when computing the chain contrastive loss function 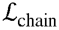 .

These characteristics offer the advantage of addressing the challenge posed by sparse spatial annotations by leveraging large-scale pseudo-labels generated, for example, from pretrained instance segmentation models such as the Segment Anything Model (SAM) or Detic (Detecting Twenty-thousand Classes using Image-level Supervision). These pseudo-labeled entities serve as additional negative examples, significantly expanding the pool of hard negatives available during training and thereby enhancing the discriminative power of the learned entity representations.

In particular implementations, the contrastive loss function 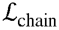 is computed as a linear combination of equation #(8) and of a negative loss 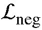 . This negative loss 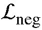 can, for example, be expressed as follows: ${L}_{neg} = - {\sum }_{t} {\sum }_{i} log \left(\frac{exp \left({f}_{t}^{i}⋅\frac{{f}_{t}^{i}}{τ}\right)}{{\sum }_{k \neq j} exp \left({f}_{t}^{i}⋅\frac{{f}_{t}^{j}}{τ}\right) + {\sum }_{m} exp \left({f}_{t}^{i}⋅\frac{{f}_{t}^{m}}{τ}\right)}\right)$ (9)
with *m* the index of the pseudo-negative proposals, *τ* a temperature parameter, ${f}_{t}^{i}$ the embeddings of entity *i* in frame *t,* ${f}_{t}^{j}$ the embeddings of entity *j* in frame *t,* ${f}_{t}^{m}$ the embeddings of the pseudo-negative proposal m in frame *t.*

Of course, functions other than a linear combination can also be envisaged. For example, one could take combinations of non-linear monotonically increasing functions of each of the two losses.

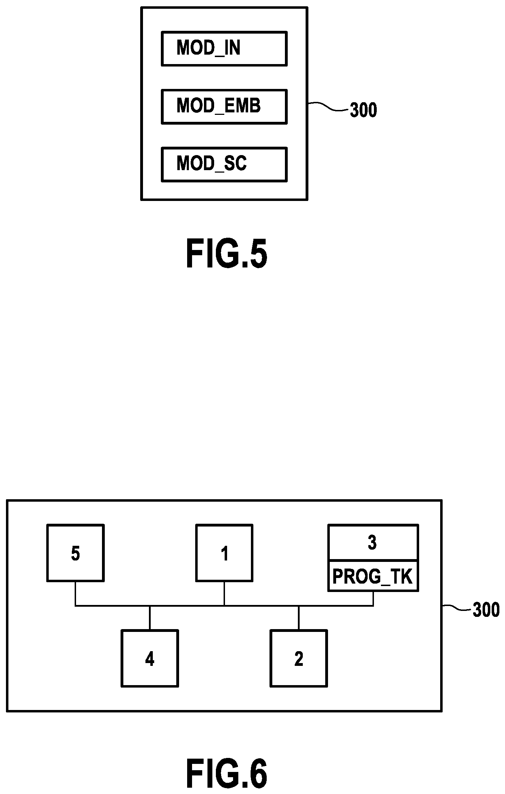

Figure 5 illustrates on-board modules in an electronic device (also referred to as the tracking device below) configured to implement the tracking method according to the invention, according to an example of implementation of the invention. The tracking device 300 can be identical to the training device 200 or can be a distinct electronic device. This tracking device 300 includes several functional modules:
- an input module MOD_IN for inputting a sequence of frames into a machine learning model trained according to the invention. This sequence of frames includes entities to track among the images of the sequence.
- a generation module MOD_EMB for generating embeddings of a detected entity; and,
- an association module MOD_SC for associating said entity with an existing track by computing similarity scores between the generated embeddings and embeddings of entities currently tracked.

The functionalities attached to each of the modules are explained in detail later on when describing implementations of said tracking method.

Figure 6 illustrates an example of the hardware architecture of the tracking device of Figure 5.

To this end, the tracking device 300 has the hardware architecture of a computer. As shown in Figure 6, the tracking device comprises a processor 1. Although illustrated as a single processor 1, two or more processors can be used according to particular needs, desires, or particular implementations of the tracking device. Generally, the processor 1 executes instructions and manipulates data to perform the operations of the tracking device and any algorithms, methods, functions, processes, flows, and procedures as described in the present disclosure.

The tracking device also comprises communication means 5. Although illustrated as a single communication means 5 in Figure 6, two or more communication means can be used according to particular needs, desires, or particular implementations of the tracking device. The communication means may be used by the tracking device for communicating with another electronic device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside the illustrated tracking device.

The tracking device also comprises a random access memory 2, a read-only memory 3, and a non-volatile memory 4. The read-only memory 3 of the tracking device constitutes a recording medium conforming to the invention, which is readable by processor 1 and on which is recorded a computer program PROG_TK conforming to the invention, containing instructions for carrying out the steps of the tracking method according to the invention.

The program PROG_TK defines functional modules of the tracking device, which are based on or control the aforementioned elements 1 to 5 of the tracking device, and which comprise in particular the modules described with reference to Figure 5.

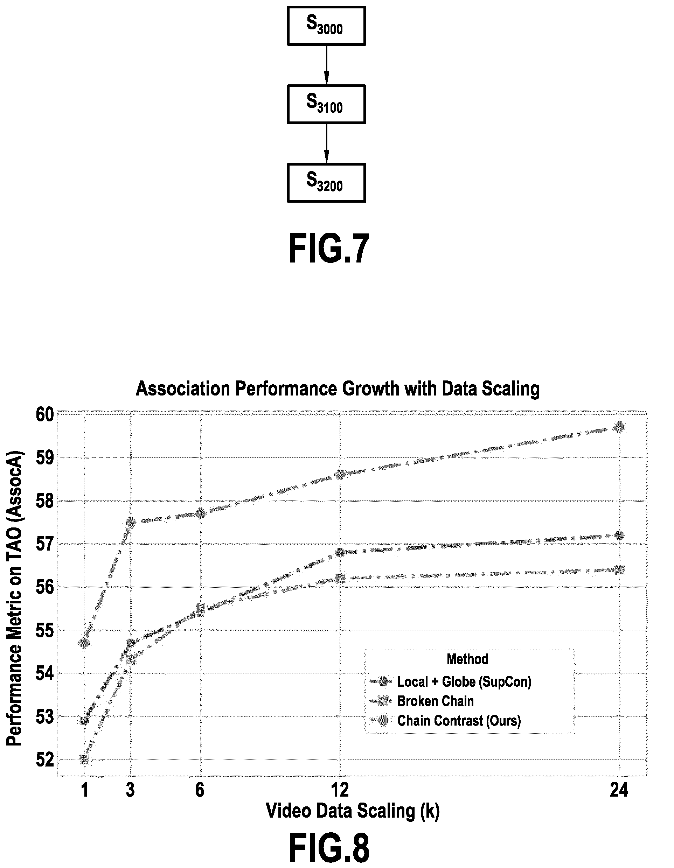

Figure 7 is a flowchart of a tracking method executed by a tracking device - such as that shown in Figures 5 and 6 - according to an example of implementation of the invention.

The tracking method comprises a first step S3000 of inputting a sequence of frames into a machine learning model. This model has been trained according to the training method described above. The sequence comprises frames containing entities to be tracked across the frames of the sequence. This step can be carried out, for example, by the input module MOD_IN of the tracking device 300.

At step S3100, embeddings of a detected entity are generated. This step can be carried out, for example, by the generation module MOD_EMB of the tracking device 300.

Finally, at step S3200, it is determined whether this entity should be associated with an existing track by computing similarity scores between the generated embeddings and embeddings of entities currently tracked. This step can be carried out, for example, by the association module MOD_SC of the tracking device 300. More precisely, given extracted embeddings, pairwise cosine similarity scores are computed between detected entities and existing tracks. Entity associations are for example determined using the Hungarian algorithm, assigning detections to tracks by minimizing the cost: $HungarianMatching \left(1-S,τ\right)$ (10)
where **S** is the similarity matrix, and *τ* a threshold to filter low-confidence matches. This threshold *τ* is, by way of example, set at 0.1.

### Experimental setup

The machine learning model was trained for 5 epochs using the AdamW optimizer, with an initial learning rate of 10⁻⁴, decayed after 2 epochs. The model was trained with a batch size of 1 video clip and 10 frames per clip. The transformer hidden dimension was set to 256.

Large-scale multi-class MOT were evaluated using the TETA metrics. In a known manner, TETA decomposes tracking evaluation into three aspects: Localization (LocA), Association (AssocA), and Classification (ClsA), providing an interpretable analysis of tracker performance. Moreover, TETA accommodates incomplete annotations, particularly suiting "Open-Vocabulary Multiple Object Tracking", Open-Vocabulary MOT. For standard MOT benchmarks, a fair comparison of association performance was ensured by using the same detections as leading trackers.

The tracking method of the invention, named "ScaleTrack" above, was evaluated on multiple datasets, each presenting unique challenges in MOT.

Open-Vocabulary MOT assesses a tracker's ability to generalize to novel entity classes without training on their annotations. TAO follows the "Large Vocabulary Instance Segmentation", LVIS, taxonomy, where frequent and common classes form the base set, while rare ones constitute the novel set. TAO TETA is a closed set MOT benchmark allowing training on all class annotations within TAO. TAO is designed to track a diverse range of objects, encompassing over 800 categories, making it the most diverse MOT dataset with the largest class collection to date. It contains 500, 988, and 1,419 videos annotated at 1 FPS in the train, validation, and test sets, respectively. The performance was reported on the validation set of the original dataset. TAO emphasizes the quality of association, rewarding trackers that generate accurate and non-overlapping trajectories. BDD100K MOT evaluates tracking performance in driving scenes. It includes 200 validation videos annotated at 5 FPS, requiring trackers to handle common traffic objects in dynamic urban environments. SportsMOT is a large-scale Multi-Object Tracking benchmark of sports scenes, covering basketball, volleyball, and football. It consists of 240 videos, 150 K frames, and 1.6 M bounding boxes, and presents challenges such as fast, variable-speed motion and visually similar players, making object association a key challenge. OVT-B is a large-scale open-vocabulary Multi-Object Tracking benchmark with 1,048 object categories and 1,973 videos containing 637,608 bounding box annotations. Built from seven datasets, it introduces diverse challenges, including severe occlusions and small, visually similar objects.

To study the effects of large-scale training, the SA-V dataset, a large-scale video object segmentation dataset with 35.5 M masks across 50.9 K videos, was leveraged. Unlike traditional datasets, SA-V provides dense mask annotations for a diverse range of entities, including parts and subparts, making it well-suited for open-world tracking. The model of the invention was trained on subsampled sequences from "sav_0 00" to "sav_023".

### Comparison with the state of the art

To accurately assess the association capabilities of the training method ScaleTrack disclosed herein, identical detection observations were utilized as those employed by current state-of-the-art methods in standard Multi-Object Tracking benchmarks.

Zero-shot association tests were performed for all variants, and the same weights were used across all benchmarks.

**Table 1: Comparison with the state of the art on Open-Vocabulary MOT**

| Method | Novel | | | | Base | | | |
|---|---|---|---|---|---|---|---|---|
| Validation set | TETA | LocA | AssocA | ClsA | TETA | LocA | AssocA | ClsA |
| QDTrack | 22.5 | 42.7 | 24.4 | 0.4 | 27.1 | 45.6 | 24.7 | 11.0 |
| TETer | 25.7 | 45.9 | 31.2 | 0.3 | 30.3 | 47.4 | 31.6 | 12.1 |
| DeepSORT (ViLD) | 21.1 | 46.4 | 19.0 | 0.2 | 27.5 | 47.1 | 15.8 | 17.7 |
| Tracktor++ (ViLD) | 22.7 | 46.7 | 21.0 | 0.5 | 28.4 | 47.5 | 17.5 | 17.0 |
| ByteTrack | 22.0 | 48.3 | 20.8 | 0.3 | 28.2 | 50.0 | 18.4 | 17.3 |
| OC-SORT | 23.7 | 49.6 | 20.1 | 0.6 | 29.2 | 51.4 | 20.4 | 16.1 |
| OVTrack | 29.3 | 48.0 | 32.5 | 2.7 | 35.0 | 51.3 | 33.2 | 23.2 |
| SLAck | 31.1 | 54.3 | 31.2 | 1.3 | 37.2 | 55.0 | 37.6 | 19.1 |
| NetTrack | 32.6 | 51.3 | 33.0 | 13.3 | 33.0 | 45.7 | 28.6 | 24.8 |
| MASA (Detic) | 40.8 | 64.4 | 41.2 | 17.0 | 46.0 | 66.0 | 44.5 | **30.5** |
| **ScaleTrack** (Detic) | **44.0** | **65.8** | **48.6** | **17.7** | **49.1** | **66.3** | **52.3** | 28.7 |

**Open-Vocabulary MOT.** Table 1 evaluates tracking methods on the Open-Vocabulary MOT benchmark, which assesses generalization to novel categories following the Large Vocabulary Instance Segmentation taxonomy. Supervised in-domain methods, such as SLAck and OVTrack, perform well but require extensive labeled data, limiting scalability. In the zero-shot setting, the method of the invention, ScaleTrack, outperforms the prior state of the art, surpassing MASA by 3.2% in TETA and 7.4% in AssocA on novel classes, demonstrating superior entity association.

**Table 2: Comparison with the state of the art on TAO TETA, † : usage of the same detector**

| Method | TETA | LocA | AssocA | ClsA |
|---|---|---|---|---|
| *Supervised, in-domain* | | | | |
| SORT | 24.9 | 48.1 | 14.3 | 12.1 |
| Tracktor | 24.2 | 47.4 | 13.0 | 12.1 |
| Tracktor++ | 28.0 | 49.0 | 22.8 | 12.1 |
| DeepSORT | 26.0 | 48.4 | 17.5 | 12.1 |
| QDTrack | 30.0 | 50.5 | 27.4 | 12.1 |
| TETer | 34.6 | 52.1 | 36.7 | 15.0 |
| SLAck-T ^{†} | 35.5 | 52.2 | 38.9 | 15.6 |
| SLAck-L ^{†} | 41.1 | 56.3 | 41.8 | 25.1 |

| *Zero-shot* | | | | |
|---|---|---|---|---|
| UNINEXT(R50) | 31.9 | 43.3 | 35.5 | 17.1 |
| GLEE-Plus(SwinL) | 41.5 | 52.9 | 40.9 | 30.8 |
| GLEE-Pro(EVA02-L) | 47.2 | 66.2 | 46.2 | 29.1 |
| MASA (Detic) ^{†} | 46.3 | 65.8 | 44.1 | 28.9 |
| **ScaleTrack** (Detic) ^{†} | 48.5 | 66.2 | 51.9 | 27.4 |
| **ScaleTrack** (CoDETR) | **57.7** | **71.6** | **60.3** | **41.6** |

**TAO TETA.** The same observations as those used for MASA Detic were used. As shown in Table 2, the proposed method, ScaleTrack, achieves the highest performance, without any training on in-domain data, significantly outperforming existing approaches on both **AssocA** and **TETA.** This illustrates that the proposed method couples well with current detection foundation models and transfers their strong detection performance into tracking.

**Table 3: Comparison with the state of the art on BDD100K MOT (validation set). ^{†} : usage of the same detection observations; ↑ the higher the score for the metric, the better.**

| Method | TETA↑ | LocA↑ | AssocA↑ | mIDF1↑ | IDF1↑ | mHOTA↑ |
|---|---|---|---|---|---|---|
| *Supervised, in-domain* | | | | | | |
| QDTrack | 47.8 | 45.9 | 52.9 | 51.6 | 71.5 | - |
| TETer | 50.8 | 47.2 | 52.9 | 53.3 | 71.1 | - |
| MOTR | 50.7 | 35.8 | 51.0 | 54.0 | 65.8 | - |
| UNINEXT-H | - | - | - | **56.7** | 69.9 | - |
| ByteTrack ^{†} | 55.7 | - | 51.5 | 54.8 | 70.4 | - |
| MeMOTR | 53.6 | 38.1 | **56.7** | 48.8 | 69.2 | 40.4 |

| *Zero-shot* | | | | | | |
|---|---|---|---|---|---|---|
| MASA (SAM-H) ^{†} | 54.2 | 53.7 | 51.9 | 55.3 | 71.7 | 45.9 |
| MASA (Detic) ^{†} | 54.4 | 52.7 | 52.9 | 55.8 | 71.3 | 46.2 |
| **ScaleTrack-S** ^{†} | **56.3** | **53.9** | 56.0 | **56.7** | **73.8** | **46.6** |

**BDD100K MOT.** As shown in Table 3, MeMOTR achieves strong AssocA performance among the supervised trackers on BDD100K, but requires dataset-specific tuning. In the zero-shot setting, the proposed method, ScaleTrack, outperforms MASA, and achieves the best TETA ( +1.9% ) and AssocA ( +3.1% ), as well as the highest IDF1 and HOTA.

These improvements highlight the effectiveness of the aforementioned chain contrastive training and spatiotemporal attention mechanism, which enable robust tracking without full supervision. The results demonstrate that ScaleTrack achieves state-of-the-art generalization in real-world driving environments.

**Table 4: Comparison with the state of the art on SportsMOT (test set). Official SportsMOT baseline detections were used. ^{†} : usage of the same detection observations.**

| Methods | HOTA | AssA | DetA | IDF1 | MOTA |
|---|---|---|---|---|---|
| *Supervised, in-domain* | | | | | |
| QDTrack | 60.4 | 47.2 | 77.5 | 62.3 | 90.1 |
| ByteTrack | 62.1 | 50.5 | 76.5 | 69.1 | 93.4 |
| OC-SORT | 68.1 | 54.8 | 84.8 | 68.0 | 93.4 |
| TransTrack | 68.9 | 57.5 | 82.7 | 71.5 | 92.6 |
| MeMOTR | 68.8 | 57.8 | 82.0 | 69.9 | 90.2 |
| SambaMOTR | 69.8 | 59.4 | 82.2 | 71.9 | 90.3 |
| MOTIP | 71.9 | 62.0 | 83.4 | 75 | 92.9 |
| MixSort-Byte ^{†} | 65.7 | 54.8 | 78.8 | 74.1 | 96.2 |
| MixSort-OC ^{†} | 74.1 | 62.0 | **88.5** | 74.4 | **96.5** |

| *Zero-shot* | | | | | |
|---|---|---|---|---|---|
| **ScaleTrack-S** ^{†} | **76.2** | **66.7** | 87.0 | **79.3** | 95.0 |

**SportsMOT.** Table 4 shows the results for the SportsMOT benchmark, which is challenging due to fast motion and visually similar players. In the zero-shot setting, the proposed method, ScaleTrack, outperforms all previous methods, including supervised trackers, achieving the highest HOTA ( +2.1% compared to MixSort-OC) and IDF1 (+4.7%). These results demonstrate the effectiveness of the aforementioned chain contrastive training and spatiotemporal attention mechanism in handling fine-grained entity association, even without category-specific training.

**Table 5: Comparison with the state of the art on OVT-B. The proposed method was compared using the Open-Vocabulary MOT benchmark. ^{†} : usage of the same detector.**

| | All | | | | Base | | | | Novel | | | |
|---|---|---|---|---|---|---|---|---|---|---|---|---|
| Metho d | TE TA | Lo cA | Ass ocA | Cl sA | TE TA | Lo cA | Ass ocA | Cl sA | TE TA | Lo cA | Ass ocA | Cl sA |
| ByteTr ack | 20. 1 | 36. 1 | 12.4 | 11. 9 | 20. 6 | 35. 6 | 12.7 | 13. 4 | 19. 6 | 36. 6 | 12.0 | 10 .3 |
| OC-SORT | 16. 0 | 31. 2 | 4.3 | 12. 3 | 16. 5 | 31. 0 | 4.4 | 14. 3 | 15. 4 | 31. 4 | 4.3 | 10 .3 |
| Strong SORT | 24. 8 | 31. 6 | 30.7 | 12. 2 | 25. 7 | 31. 4 | 31.6 | 14. 2 | 23. 9 | 31. 8 | 29.7 | 10 .3 |
| OVTrac k | 46. 1 | 60 .8 | 66.1 | 11. 5 | 46. 8 | 60 .5 | 66.7 | 13. 4 | 45. 5 | 61. 1 | 65.5 | 9. 6 |
| OVTrac k+ | 47. 0 | 62. 0 | 67.7 | 11. 3 | 47. | 61. | 68. | 13. | 46. | 62. | 67.3 | 9. |
| MASA (Detic) ^{†} | 57. 4 | **73 .0** | 77.7 | 20.6 | 59. 2 | **73** | 78.1 **.2** | 26.2 | 55. 5 | **74 .1** | 77.3 | **15 .0** |
| ScaleTr ack-S ^{†} | **57. 8** | 72. 8 | **79. 9** | **21 .0** | **59. 6** | 72. 5 | **80. 0** | **26 .5** | **55. 9** | 73. 0 | **79. 8** | **15 .0** |

**OVT-B.** As shown in Table 5, the proposed ScaleTrack method achieves the highest overall TETA and AssocA scores on one of the most diverse and challenging MOT benchmarks, OVT-B, demonstrating superior tracking robustness across highly diverse and occluded scenarios. Notably, ScaleTrack surpasses OVTrack+ by 10.8% and 12.2% in TETA and AssocA respectively, highlighting the effectiveness of this scalable training method on sparsely annotated large-scale video data.

### Ablation Studies and Analysis

All ablation studies were conducted on the TAO dataset, using Co-DETR as the default detector. Unless otherwise specified, model variants were trained using 1,000 videos. For scaling experiments, including loss scaling, clip length scaling, and frozen feature scaling, each model was trained for a single epoch, as this provides sufficiently informative trends for comparison. The impact of different design choices on the proposed framework is analysed below.

### Effect of chain structure in contrastive learning.

As illustrated in Figure 5, breaking the chain structure ("Broken Chain") by optimizing contrastive pairs between isolated frame pairs independently significantly degrades performance. This indicates that the chain structure is crucial for propagating meaningful long-range associations. Furthermore, combining local and global contrast without structured chaining ("Local+Global") is ineffective at scaling as video data grows. By contrast, the proposed chain contrast training ("Chain Contrast") maintains continuous, transitive connections between frames, effectively capturing long-range appearance consistency and demonstrating superior scalability.

**Table 6: Ablation of pseudo-negative proposals. Incorporating pseudo-negative proposals enhances the discriminability of features, resulting in a substantial increase in AssocA; ↑ the higher the score for the metric, the better.**

| Method | AssocA ↑ |
|---|---|
| w/o Pseudo-Negative Proposals | 53.5 |
| w/ Pseudo-Negative Proposals | **57.3** |

### Pseudo-negative proposals.

The impact of incorporating pseudo-negative proposals during training was evaluated. As shown in Table 6, removing pseudo-negatives results in a 3.8% drop in AssocA. Leveraging additional hard negative examples from instance segmentation models enables the proposed approach to learn more discriminative entity embeddings, thereby reducing ID switches and improving the overall association.

**Table 7: Ablation of model components.**

| Frozen DINOv2 | Chain Contrast | Spatial Att Pool | Cross Att | Temporal Att | AssocA |
|---|---|---|---|---|---|
| ✔ | | | | | 47.9 |
| ✔ | ✔ | | | | 55.2 |
| ✔ | ✔ | ✔ | ✔ | | 55.7 |
| ✔ | ✔ | ✔ | ✔ | ✔ | 56.7 |
| ✔ | ✔ | ✔ | ✔ | ✔ | 57.3 |

### Effectiveness of model components.

Table 7 shows the impact of individual model components on TAO. Starting with a frozen DINOv2 backbone and adding a Transformer-based feature adapter, as well as training with a chained contrastive loss, significantly improves performance by adapting static image features for tracking. Incorporating spatial attention pooling further enriches the spatial context, yielding an additional improvement in performance. Adding cross-attention effectively aggregates multi-level spatial features within the current frame, further enhancing entity discrimination. Finally, temporal fusion, which explicitly integrates historical context, achieves the best overall result.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for training a machine learning model (100) to track a plurality of entities, the method comprising:
- inputting (S100) a sequence of frames into the machine learning model (100), the sequence of frames including entities to track among the frames of the sequence; and,
- training (S2000) the machine learning model (100) to maximize a distance between embeddings of different entities within a same frame of the sequence, while minimizing the distance between embeddings of a same entity across two consecutive frames of the sequence, the training being performed over N>2 frames of the sequence of frames.

2. The training method according to Claim 1, wherein consecutive frames of the sequence are organized into pairs, wherein the training step is performed by minimizing a chain contrastive loss function 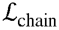 resulting from an aggregation of cross-entropy losses 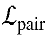 computed across all pairs of the sequence.

3. The training method according to Claim 2, wherein the cross-entropy loss 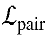 is a normalized temperature-scaled cross-entropy loss performed between embeddings ( ${f}_{t}^{i} , {f}_{t + 1}^{j}$) of two entities (*i*, *j*) corresponding to positive pairs within two consecutive frames (*t, t +* 1), and the normalized temperature-scaled cross-entropy loss ( 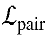 ) is a function of: $- log \left(\frac{exp \left({f}_{t}^{i}.\frac{{f}_{t + 1}^{j}}{τ}\right)}{{\sum }_{k \neq j} exp \left({f}_{t}^{i}.\frac{{f}_{t + 1}^{k}}{τ}\right) + exp \left({f}_{t}^{i}.\frac{{f}_{t + 1}^{j}}{τ}\right)}\right)$ with *τ* a temperature parameter, ${f}_{t}^{i}$ the embeddings of entity *i* in frame *t,* ${f}_{t + 1}^{j}$ the embeddings of entity *j* in frame *t +* 1*,* ${f}_{t + 1}^{k}$ the embeddings of entity *k* in frame *t*+1.

4. The training method according to Claim 2 or 3, wherein the chain contrastive loss function 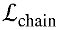 is a function of: $\frac{1}{\left|M\right|} {\sum }_{\left(t,t+1\right) ∈ T} {\sum }_{\left(i, j\right) ∈ {M}_{t , t + 1}} {L}_{pair} \left({f}_{t}^{i}, {f}_{t + 1}^{j}\right)$ with 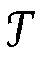 a set of consecutive frame pairs, | 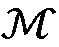 | a number of positive pairs sampled across the entire sequence of frames, *τ* a temperature parameter, ${f}_{t}^{i}$ the embeddings of entity *i* in frame *t,* ${f}_{t + 1}^{j}$ the embeddings of entity *j* in frame *t +* 1, ${f}_{t + 1}^{k}$ the embeddings of entity *k* in frame *t*+1.

5. The training method according to any one of Claims 1 to 4, wherein the machine learning model (100) is a Transformer-based network, wherein at least some of the entities to track are labeled, wherein the training method further comprises:
- for at least a subset of frames of the sequence of frames, extracting portions of frames corresponding to pseudo-negative proposals;
- considering the pseudo-negative proposals as hard negatives when computing the chain contrastive loss function ( 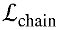 ).

6. The training method according to Claim 5, wherein considering the pseudo-negative proposals as hard negatives includes computing the contrastive loss function 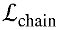 as a function of a negative loss 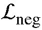 , said negative loss 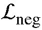 being a function of: $- {\sum }_{t} {\sum }_{i} log \left(\frac{exp \left({f}_{t}^{i}⋅\frac{{f}_{t}^{i}}{τ}\right)}{{\sum }_{k \neq j} exp \left({f}_{t}^{i}⋅\frac{{f}_{t}^{j}}{τ}\right) + {\sum }_{m} exp \left({f}_{t}^{i}⋅\frac{{f}_{t}^{m}}{τ}\right)}\right)$ with m the index of the pseudo-negative proposals, *τ* a temperature parameter, ${f}_{t}^{i}$ the embeddings of entity *i* in frame *t,* ${f}_{t}^{j}$ the embeddings of entity *j* in frame *t,* ${f}_{t}^{m}$ the embeddings of the pseudo-negative proposal m in frame *t.*

7. The training method according to any one of Claims 1 to 6, wherein the machine learning model (100) includes a frozen visual backbone (110) connected to a deformable transformer encoder (120), wherein the sequence of frames serves as input to the frozen visual backbone (110), and the method further comprises:
- generating (S200), by the frozen visual backbone (110), multi-scale spatial features ${\left\{{F}_{l}\right\}}_{l = 1}^{L}$, with L a total number of feature levels of the frozen visual backbone (110);
- generating (S300), by the deformable transformer encoder (120) taking the multi-scale spatial features ${\left\{{F}_{l}\right\}}_{l = 1}^{L}$ as an input, a final encoded feature map **M** comprising *L* unified contextual representations (**M***_{L}*).

8. The training method according to Claim 7, wherein $M ∈ {ℝ}^{B \times S \times D}$, with *B* a batch size, *S* a total number of spatial locations across all feature levels, and *D* is a feature embedding dimension.

9. The training method according to Claim 7 or 8, further comprising refining the final encoded feature map **M** by integrating a spatial context.

10. The training method according to Claim 9, wherein integrating a spatial context comprises:
- generating (S400), from the final encoded feature map **M** and from regions of interest corresponding to spatial locations of entities to track, a fixed-size feature map per region of interest; and,
- determining (S500), for each fixed-size feature map, attention weights (**f**ₐₜₜₙ ) over spatial locations within each of the regions of interest.

11. The training method according to Claim 10, wherein attention weights **f**ₐₜₜₙ are expressed as a function of ${\sum }_{k , l} {f}_{k , l} ⋅ σ \left(MLP\left({f}_{k , l}\right)\right)$ with **f***_{x,y}* regions of interest features, *σ* a spatial softmax, and MLP a multi-layer perceptron function used to generate embeddings.

12. The training method according to Claim 10 or 11, wherein integrating a spatial context further comprises:
- predicting (S600) learnable spatial offsets from the regions of interest, the offsets specifying additional sampling locations within each of the regions of interest;
- determining (S650) enriched spatial features (**f**_{sampled} ) by applying a differentiable bilinear sampling function on the predicted spatial offsets; and,
- concatenating and fusing (S700) the enriched spatial features to obtain spatially enhanced embeddings (**f**ₛₚₐₜᵢₐₗ ).

13. The training method according to any one of Claims 7 to 12, further comprising refining the final encoded feature map **M** by integrating a temporal context.

14. The training method according to Claim 13, wherein integrating a temporal context further comprises:
- for each spatially enhanced embedding (**f**ₛₚₐₜᵢₐₗ ), predicting (S800) adaptive sampling offsets *(*Δ*t,* Δ*x,* Δ*y*) and corresponding attention weights;
- extracting (S850) features from neighboring spatial and temporal locations within a buffer (**F**ₜₑₘₚ ) of unified contextual representations constructed from the final encoded feature map **M**; and,
- aggregating (S900) the extracted features using the attention weights to produce spatially and temporally-enhanced embeddings (**f**_{fused} ).

15. The training method according to Claim 14, further comprising modulating (S1000) the spatially and temporally-enhanced embeddings (**f**_{fused} ).

16. The training method according to Claim 15, wherein modulating (S1000) the spatially and temporally-enhanced embeddings (**f**_{fused} ) is expressed as a function of $\frac{1}{{N}_{h}} {\sum }_{h = 1}^{{N}_{h}} σ \left({W}_{h}{f}_{fused}\right) ⋅ {f}_{fused}$ with *Nₕ* a number of attention heads, **W***ₕ* head-specific learnable linear transformations, *σ* a head-level softmax, and **f**_{fused} the spatially and temporally-enhanced embeddings.

17. The training method according to Claim 15 or 16, further comprising refining (S1100) the modulated embeddings through a multiscale cross-attention mechanism.

18. A computer-implemented method for tracking a plurality of entities comprising:
- inputting (S3000) a sequence of frames into a machine learning model (100) trained according to anyone of Claims 1 to 17, the sequence of frames including entities to track among the images of the sequence;
- generating (S3100) embeddings of a detected entity; and,
- associating (S3200) said entity with an existing track by computing similarity scores between the generated embeddings and embeddings of entities currently tracked.

19. A computer program set including instructions for executing the steps of the training method according to any one of Claims 1 to 17 and/or of the tracking method according to Claim 18, when said program set is executed by at least one computer.

20. A recording medium readable by at least one computer and having recorded thereon at least one computer program including instructions for executing the steps of the training method according to any one of Claims 1 to 17 or of the tracking method according to Claim 18.

21. An electronic device (200, 300) configured to implement a training method according to any one of Claims 1 to 17 or a tracking method according to Claim 18.

## Amended claims

### Amended claims in accordance with Rule 137(2) EPC.

1. A computer-implemented method for training a machine learning model (100) to track a plurality of entities, the method comprising:
- inputting (S100) a sequence of frames into the machine learning model (100), the sequence of frames including entities to track among the frames of the sequence; and,
- training (S2000) the machine learning model (100) to maximize a distance between embeddings of different entities within a same frame of the sequence, while minimizing the distance between embeddings of a same entity across two consecutive frames of the sequence, the training being performed over N>2 frames of the sequence of frames
said training method being **characterized in that** consecutive frames of the sequence are organized into pairs, wherein the training step is performed by minimizing a chain contrastive loss function 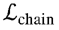 resulting from an aggregation of cross-entropy losses 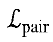 computed across all pairs of the sequence.

2. The training method according to Claim 1, wherein the cross-entropy loss 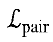 is a normalized temperature-scaled cross-entropy loss performed between embeddings ( ${f}_{t}^{i} , {f}_{t + 1}^{j}$) of two entities (i,j) corresponding to positive pairs within two consecutive frames *(t, t +* 1), and the normalized temperature-scaled cross-entropy loss ( 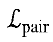 ) is a function of: $- log \left(\frac{exp \left({f}_{t}^{i}.\frac{{f}_{t + 1}^{j}}{τ}\right)}{{\sum }_{k \neq j} exp \left({f}_{t}^{i}.\frac{{f}_{t + 1}^{k}}{τ}\right) + exp \left({f}_{t}^{i}.\frac{{f}_{t + 1}^{j}}{τ}\right)}\right)$ with *τ* a temperature parameter, ${f}_{t}^{i}$ the embeddings of entity i in frame *t,* ${f}_{t + 1}^{j}$ the embeddings of entity *j* in frame *t +* 1, ${f}_{t + 1}^{k}$ the embeddings of entity *k* in frame t+1.

3. The training method according to Claim 1 or 2, wherein the chain contrastive loss function 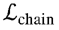 is a function of: $\frac{1}{\left|M\right|} {\sum }_{\left(t,t+1\right) ∈ T} {\sum }_{\left(i, j\right) ∈ {M}_{t , t + 1}} {L}_{pair} \left({f}_{t}^{i}, {f}_{t + 1}^{j}\right)$ with 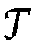 a set of consecutive frame pairs, | 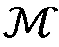 | a number of positive pairs sampled across the entire sequence of frames, *τ* a temperature parameter, ${f}_{t}^{i}$ the embeddings of entity i in frame *t,* ${f}_{t + 1}^{j}$ the embeddings of entity *j* in frame *t +* 1, ${f}_{t + 1}^{k}$ the embeddings of entity *k* in frame t+1.

4. The training method according to any one of Claims 1 to 3, wherein the machine learning model (100) is a Transformer-based network, wherein at least some of the entities to track are labeled, wherein the training method further comprises:
- for at least a subset of frames of the sequence of frames, extracting portions of frames corresponding to pseudo-negative proposals;
- considering the pseudo-negative proposals as hard negatives when computing the chain contrastive loss function ( 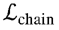 ).

5. The training method according to Claim 4, wherein considering the pseudo-negative proposals as hard negatives includes computing the contrastive loss function 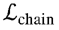 as a function of a negative loss 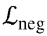 , said negative loss 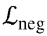 being a function of: $- {\sum }_{t} {\sum }_{i} log \left(\frac{exp \left({f}_{t}^{i}.\frac{{f}_{t}^{i}}{τ}\right)}{{\sum }_{k \neq j} exp \left({f}_{t}^{i}.\frac{{f}_{t}^{j}}{τ}\right) + {\sum }_{m} exp \left({f}_{t}^{i}.\frac{{f}_{t}^{m}}{τ}\right)}\right)$ with m the index of the pseudo-negative proposals, *τ* a temperature parameter, ${f}_{t}^{i}$ the embeddings of entity i in frame *t,* ${f}_{t}^{j}$ the embeddings of entity *j* in frame *t,* ${f}_{t}^{m}$ the embeddings of the pseudo-negative proposal m in frame *t.*

6. A computer-implemented method for tracking a plurality of entities comprising:
- inputting (S3000) a sequence of frames into a machine learning model (100) trained according to anyone of Claims 1 to 5, the sequence of frames including entities to track among the images of the sequence;
- generating (S3100) embeddings of a detected entity; and,
- associating (S3200) said entity with an existing track by computing similarity scores between the generated embeddings and embeddings of entities currently tracked.

7. A computer program set including instructions for executing the steps of the training method according to any one of Claims 1 to 5 and/or of the tracking method according to Claim 6, when said program set is executed by at least one computer.

8. A recording medium readable by at least one computer and having recorded thereon at least one computer program including instructions for executing the steps of the training method according to any one of Claims 1 to 5 or of the tracking method according to Claim 6.

9. An electronic device (200, 300) configured to implement a training method according to any one of Claims 1 to 5 or a tracking method according to Claim 6.
